# EUROPEAN PATENT APPLICATION

(11) **EP 1 731 982 A1**
(43) Date of publication of application: **13.12.2006**
(21) Application number: 06011106.9
(22) Date of filing: 30.05.2006
(51) Int. Cl.: G05D 1/02

(54) **Inertial navigational guidance system for a driverless vehicle utilizing laser obstacle sensors**

(30) Priority: 02.06.2005 US 142934
(71) Applicant: JERVIS B. WEBB INTERNATIONAL COMPANY, Farmington Hills, Michigan 48331-5624 (US)
(72) Inventor: Crumbaugh, Timothy Ross, Boyne City, MI 48712 (US)
(74) Representative: Tönhardt, Marion

(57) **Abstract**

A navigational control system for, and method of controlling the operation of, a driverless vehicle. The system includes a vehicle travel path and a visual object detection system for generating data relating to the position of the vehicle relative to objects in readable proximity to the travel path. The system includes an inertial guidance system for controlling operation of steering and drive mechanisms to direct the vehicle substantially along the travel path, and for correcting deviation from said travel path based upon data generated by said visual object detection systems, and for detecting impending obstacle contact.

## Description

### BACKGROUND OF THE INVENTION

The present invention relates to an inertial navigational guidance system for a driverless vehicle and, more particularly, to a system for utilizing laser obstacle sensor data to update the navigational system without the use of secondary devices along the path of the driverless vehicle.

Inertial guidance systems for guiding a driverless vehicle are well known, and have many advantages in specific applications, but generally require an absolute position update to be entered into the navigational system to correct for errors which may result from tire slippage, skewing or floor deviations. Absolute position indicators are commonly disposed along the vehicle guide path to provide periodic absolute position updates to the vehicle guidance system thereby increasing guidance accuracy and ensuring proper positioning of the vehicle. The floor-disposed position indicators provide the vehicle guidance system with the position of the vehicle in an absolute coordinate system. Such position indicators and the corresponding readers are expensive, require labor-intensive installation, and require detailed surveying of their positions once installed. Further, such position indicators are subject to the workplace environment which may diminish their accuracy. Still further, permanent or fixed markers reduce the flexibility of the driverless vehicle, restricting the ability of the vehicle to be programmed for a variety of paths or different facilities without increased cost for additional position indicators to be installed.

### SUMMARY OF THE INVENTION

The present invention, referred to as an independent navigational control system with positional correction, includes an inertial guidance system in communication with one or more laser obstacle sensors. The laser obstacle sensors periodically relay positional information with respect to a fixed object, which is utilized in the systems navigational correction routines. In this manner, the system uses the laser-derived positional data to correct errors in the inertial guidance positioning during the travel of the driverless vehicle along the vehicle guide path.

The present invention provides many advantages and benefits. Since many driverless vehicles or automatically guided vehicles (AGVs) have laser obstacle sensors (collision or obstacle avoidance systems) to detect potential collisions, the system is relatively inexpensive and, thus, is an appropriate addition to lower cost driverless vehicles or carts. The system is flexible allowing, in a simple and low cost manner, for the use of a driverless vehicle in a plurality of settings or over a variety of vehicle guide paths, or for the reprogramming or reuse of the vehicle or modification of the vehicle guide path. Further, the system provides improved accuracy by reducing positional drift often occurring in inertial guidance systems.

Further scope of applicability of the present invention will become apparent from the following detailed description, claims, and drawings. However, it should be understood that the detailed description and specific examples, while indicating preferred embodiments of the invention, are given by way of illustration only, since various changes and modifications within the spirit and scope of the invention will become apparent to those skilled in the art.

### BRIEF DESCRIPTION OF THE DRAWINGS

The present invention will become more fully understood from the detailed description given here below, the appended claims, and the accompanying drawings in which:
FIG. 1 is a schematic elevation view of the operation of a driverless vehicle having a navigational control system in accordance with the present invention;
FIG. 2 is a schematic plan view of the navigational control system illustrated in FIG. 1;
FIG. 3 an enlarged plan view of the vehicle of FIG. 1 in which the vehicle is moving along a path between two walls; and
FIG. 4 a plan view of a vehicle equipped with two laser obstacle sensors.

### DETAILED DESCRIPTION OF THE PREFERRED EMBODIMENT

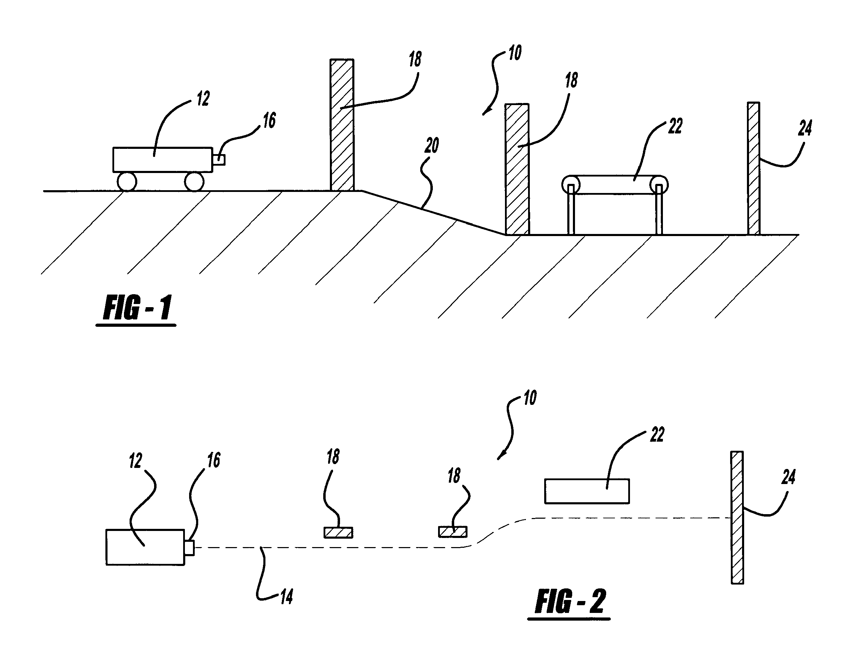

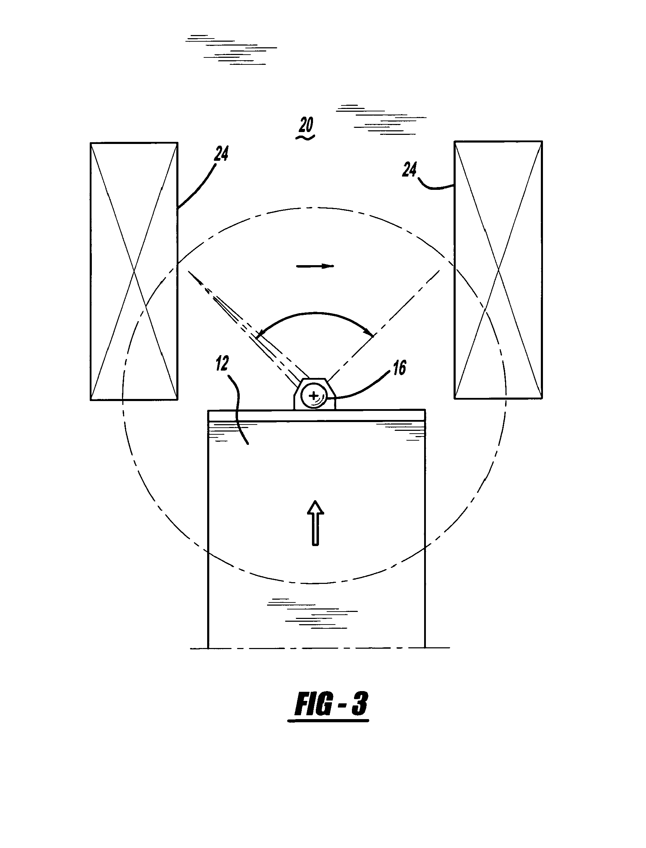

FIGS. 1 and 2 are schematic elevation and plan views, respectively, of the use of a navigational control system 10 for a driverless vehicle 12 in accordance with the present invention. The driverless vehicle 12 can be controlled by any known inertial guidance system, where the absolute position data is generated by the steering and drive mechanisms of the vehicle 12. The guidance system is designed to steer and control the vehicle 12 along a selected guide path 14 along the floor 20 to perform a variety of functions. For example, the vehicle 12 may stop, operate an on-board conveyor, reset a release command, switch or change guidance modes, or perform any of a number of other functions commonly performed by driverless vehicles. The vehicle may perform the functions while stationary or moving. Although the illustrated vehicle 12 and system 10 are shown in the context of a wheeled vehicle or cart supported by a floor, it should be appreciated that the control system and vehicle of the present invention may also be used in other material handling applications. Further, while such vehicles are typically used in industrial conditions, this invention would have utility with respect to such vehicles in domestic or other environments.

The navigational control system 10 of the present invention includes a laser obstacle sensor 16 mounted to the driverless vehicle 12. The laser obstacle sensor 16 is selectively positioned on the driverless vehicle 12 so as to detect or "read" objects near or in proximity to the vehicle guide path 14 such as overhead stanchions 18, walls 24, conveyor 22, or other structure proximate to the guide path. The system creates a map of the position of the objects along the guide path, which can be used as checkpoints in repeated trips along the path. The navigational control system 10 of the present invention utilizes data from the laser obstacle sensor 16 to provide absolute positioning updates that are used by the guidance system to determine and correct any error in vehicle movement relative to the guide path 14. Laser obstacle sensors, such as "PLS Laser Bumpers^{™}" available from Sick Inc, are well known in the art. Other optical sensors could be utilized within the scope of this invention.

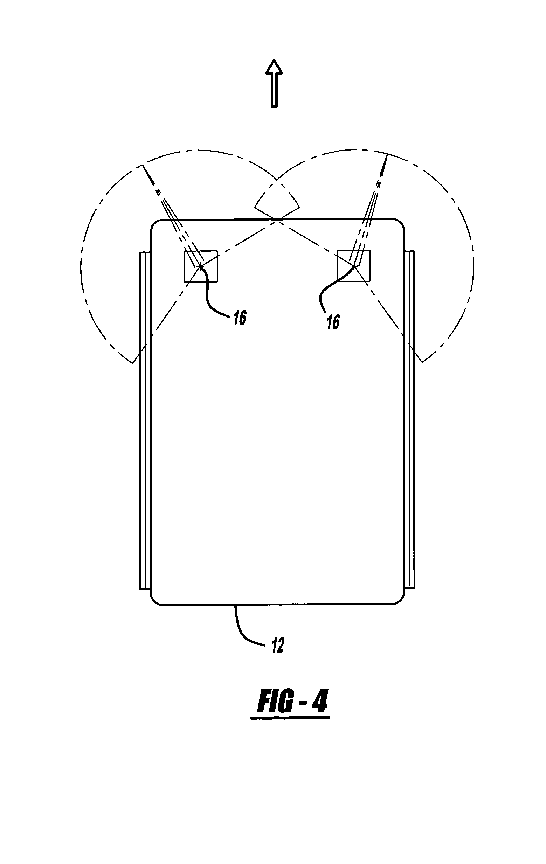

Obstacle sensors are utilized as a failsafe in industrial inertial guidance systems; should the inertial guidance system fail for some reason, the optical sensor will detect an object in proximity to the vehicle, and provide alert of an impending impact. Many systems will also provide a drive override to prevent the vehicle from continuing in the direction of a proximate object. Figures 3 and 4 illustrate a vehicle with such obstacle warning systems. These systems also function to provide a warning if a moving object, such as a person or another vehicle, is moving into proximity to the object vehicle. Although the ranges of these systems may vary or be varied, they are typically intended for close range sensing, rather than for detection of objects in the surrounding environment. Further, the input from these sensors is typically not utilized in navigation except for override or avoidance purposes.

The present invention also utilizes the obstacle sensing devices to provide relative positional information, such as distance to an object. Again, optical sensing devices to provide positional information are known in the art, and are available from sensor suppliers such as Sick, Inc. However, such sensors are typically utilized as the primary positional navigation system, such as for locating a robot arm or identifying when a work piece is in position.

By sampling the positional data, the control system 10 may compare the change in position between sampling points expected by the inertial guidance system to the relative change in position compared to the object sampled. A single laser obstacle sensor 16 is all that is required to gather data regarding the position of the vehicle relative to objects along the guide path. By using multiple laser obstacle sensors 16, the system may utilize multiple samples relative to a single object, thus allowing triangulation for a more precise positional determination. Further, it is anticipated that the sensors be positioned to acquire data regardless of the direction of travel. It is known to utilize multiple laser obstacle sensors 16 located around the perimeter of the vehicle to avoid collisions in all directions of vehicle movement. It is preferred that at least a pair of sensors be located toward each end of the vehicle, each pair separated toward each side of the vehicle, to allow for relative positioning as the vehicle approaches objects in forward or reverse travel. Figure 4 illustrates a vehicle having multiple laser obstacle sensors at the front of the vehicle.

In operation, the vehicle 12 moves along the guide path 14 under the guidance of the vehicle guidance system 10. When the vehicle is in readable proximity to an object, the laser obstacle sensor 16 measures a reference distance to the object at a given interval, and measures the distance again at additional selected intervals. By comparing the selected path and the relative distances from the fixed object at the specific intervals, the positional accuracy of the inertial guidance system can be verified. In particular, data regarding position with respect to multiple objects can be analyzed, also giving sufficient data for triangulation. For example, Fig 2 illustrates a variety of objects 18 which can be used for purposes of positional correction analysis in addition to the work station (conveyor 22) and the wall 24. Fig 3 illustrates another scenario in which the vehicle must navigate in a restricted space between a pair of walls 24, which could also be shelves, machinery boxes or the like. By sampling the position of the vehicle with respect to each of the closest comers, and the sides, the guidance system can continuously verify the accuracy of the inertial guidance system. Errors in the inertial guidance system can be corrected utilizing methods heretofore used with respect to systems which utilize secondary devices or markers as absolute position indicators. Thus, objects which are on one hand problematic as obstacles, become assets for positional correctional analysis on the other hand. The laser obstacle sensors continue to function as obstacle sensors, alerting the control system to impending collisions, so that the system may slow or halt the drive mechanism or by controlling the steering mechanism to avoid the object. However, the laser sensors also obtain relative positional information to verify the inertial guidance system.

The foregoing discussion discloses and describes an exemplary embodiment of the present invention. One skilled in the art will readily recognize from such discussion, and from the accompanying drawings and claims that various changes, modifications and variations can be made therein without departing from the true spirit and fair scope of the invention as defined by the following claims.

## Claims

1. A navigational control system (10) comprising:
a vehicle travel path (14);
at least one object (18, 22, 24) in readable proximity to the travel path (14); and
a vehicle (12) having a steering mechanism and a drive mechanism, said vehicle (12) movable along said travel path (14), said vehicle (12) further having a visual object detection system (16) for generating data relating to the position of said vehicle (12) relative to said at least one object (18, 22, 24), said vehicle (12) further having an inertial guidance system for controlling operation of said steering and drive mechanisms to direct said vehicle (12) substantially along said travel path (14), said inertial guidance system further having means for correcting deviation from said travel path (14) based upon data generated by said visual object detection system (16).

2. The system of claim 1 comprising a plurality of visual object detection systems (16).

3. The system of claim 2 wherein at least two of said visual object detection systems (16) are located toward opposing sides of said vehicle (12) from each other.

4. The system of claim 2 wherein at least two of said visual object detection systems (16) are located toward opposing ends of said vehicle (12) from each other.

5. The system of claim 1 wherein said visual object detection system (16) measures the distance of said vehicle (12) from said object (18, 22, 24).

6. The system of claim 1, said inertial guidance system further having means for mapping objects (18, 22, 24) in readable proximity to said travel path (14).

7. The system of claim 1 wherein said visual object detection system (16) repeatedly generates data relating to the position of said vehicle (12) relative to a plurality of objects (18, 22, 24).

8. A driverless vehicle (12) having:
a steering mechanism and drive mechanism to move said vehicle (12) along a travel path (14);
at least one visual object detection system (16) for generating data relating to the position of said vehicle (12) relative to at least one object (18, 22, 24) near said travel path (14);
an inertial guidance system for controlling operation of said steering mechanism and said drive mechanism to direct said vehicle (12) substantially along a travel path (14), said inertial guidance system further having means for correcting deviation from said travel path (14) based upon data generated by said visual object detection system (16).

9. The vehicle of claim 8 having a plurality of visual object detection systems (16).

10. The vehicle of claim 9 wherein at least two of said visual object detection systems (16) are located toward opposing sides of said vehicle (12) from each other.

11. The vehicle of claim 9 wherein at least two of said visual object detection systems (16) are located toward opposing ends of said vehicle (12) from each other.

12. The vehicle of claim 8 wherein said inertial guidance system further has means for mapping objects (18, 22, 24) in readable proximity to said travel path (14).

13. A method of controlling the operation of a driverless vehicle (12) using an inertial guidance system to control operation of the steering mechanism and the drive mechanism of said driverless vehicle (12) to direct said vehicle (12) substantially along a travel path (14), said method comprising;
repeatedly collecting data from at least one visual object detection system (16) relating to the position of said vehicle (12) relative to at least one object (18, 22, 24) near said travel path (14);
correcting deviation from said travel path (14) based upon data collected from said visual object detection system (16).

14. The method of claim 13 further including collecting data from a plurality of visual object detection systems (16).

15. The method of claim 13 further including mapping objects (18, 22, 24) in readable proximity to said travel path (14).

16. The method of claim 13 further including repeatedly collecting data relating to the position of said vehicle (12) relative to a plurality of objects (18, 22, 24).

17. The method of claim 16 further including triangulating the position of said vehicle (12) relative to at least three objects (18, 22, 24).

18. The system of claim 1 wherein said visual object detection system (16) provides emergency obstacle avoidance warning.

19. The vehicle of claim 9 wherein said visual object detection system (16) provides indicia of impending obstacle (24) contact.

20. The method of claim 13 further including the step of altering said operation in response to receiving indication of an impending collision from said visual object detection system (16).
